# EUROPEAN PATENT APPLICATION

(11) **EP 2 570 676 A2**
(43) Date of publication of application: **20.03.2013**
(21) Application number: 12181211.9
(22) Date of filing: 21.08.2012
(51) Int. Cl.: F04D 29/16, F04D 29/52

(54) **Abradable panel and method of forming the same**

(30) Priority: 16.09.2011 GB 201116029
(71) Applicant: Rolls-Royce plc, London SW1E 6AT (GB)
(72) Inventor: Dimelow, Stephen Jonathan, Uttoxeter, Staffordshire ST14 7QB (GB)
(74) Representative: Gee, Philip David

(57) **Abstract**

An abradable panel 10 for a fan track liner assembly comprises an abradable layer 12 comprising a syntactic material. The abradable panel 10 is arranged to be attached to a fan track liner so as to provide an abradable gas-washed surface 16. The abradable panel may further comprise a carrier tray 14 to which the abradable layer 12 is attached. There is also disclosed a method of manufacturing an abradable panel 10.

## Description

The invention relates to an abradable panel for a fan track liner assembly and a method of forming the same.

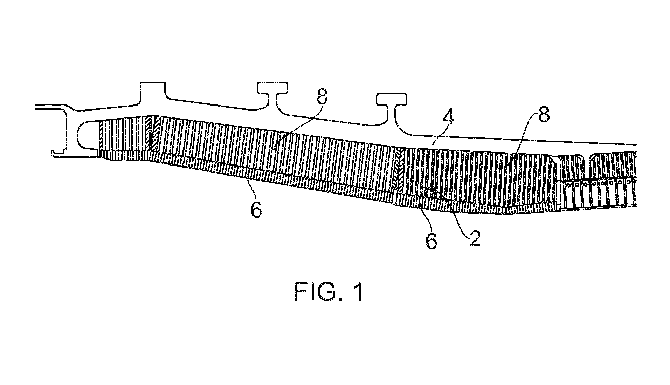

**Figure 1** shows a conventional fan track liner assembly 2 which is bonded directly to the fan case 4 of a typical jet engine. The purpose of the fan track liner assembly 2 is to contain a fan blade within the fan casing in the case that the fan blade becomes detached from its shaft. A fan track liner assembly 2 typically comprises a series of fan track liner panels 8 that are made from an aluminium honeycomb structure, and a series of abradable panels 6 that are disposed radially within and are bonded to the fan track liner panels 8. The radially inner surface of the fan track liner assembly 2 is machined after assembly to form an annular gas-washed surface. The machined surface removes assembly tolerances and so minimises the clearance between the fan track liner assembly and the fan blades.

During operation of the engine, the fan blades may radially lengthen due to centrifugal forces. This change in length of the fan blades is accounted for when the annular surface is machined but in some instances the fan blades may come into contact with the fan track liner assembly 2. This may occur during initial engine run-up, hard manoeuvring, heavy landing, gust loading, or bird strike, for example. If the fan blades come into contact with the fan track liner assembly 2 then the abradable panels 6 will be abraded which will prevent damage to the fan blades. It is desirable that the abradable panels 6 are made from a material that can be abraded with the minimum of friction in order to prevent the fan blades from overheating. It is also desirable that the abradable panels 6 are made from a material that is abraded evenly and without "plucking". "Plucking" would result in cavities being formed in the annular gas-washed surface which would result in the aeroline being spoiled causing possible erosion issues.

In a previously considered arrangement, the abradable panels 6 are made from a filler material supported by a Nomex ® honeycomb structure. The honeycomb structure supports the filler and helps to ensure that any abrasion will be even and therefore minimises "plucking".

It is considered that the abrasion of the abradable panels 6 by the fan blades creates a high-temperature that may affect the properties of the fan blade. If the blades are made from titanium, this is not considered to be an issue. However, if the blades are composite blades then it is desirable to minimise the heat generated by abrasion in order to avoid delamiation of the blade.

It is therefore desirable to provide an abradable panel which is abraded evenly and in which the heat generated by abrasion is minimised.

In a broad aspect the invention relates to the use of a syntactic material or foam as an abradable panel for a fan track liner assembly. A syntactic material is a composite material comprising a resin, such as an epoxy resin, having particles or beads, such as hollow particles or beads, dispersed throughout the resin. The syntactic material may be supplied in the form of a syntactic film which can be expanded under the action of heat to form a foam.

According to an aspect of the invention there is provided an abradable panel for a fan track liner assembly, comprising: an abradable layer comprising a syntactic material; wherein the abradable panel is arranged to be attached to a fan track liner so as to provide an abradable gas-washed surface. The syntactic material may comprise hollow polymeric beads or spheres in an epoxy based matrix, such as Synspand 9890. The abradable panel may be directly or indirectly attached to a fan track liner by bonding or with one or more mechanical fixings. In use, radially outer ends of fan blades move past the abradable panel and in certain circumstances may come into contact with and therefore abrade the abradable layer. The use of a syntactic material may allow low temperature abrasion of the abradable layer. This may be particularly useful if the fan blades are composite blades.

The syntactic material may be provided as a syntactic film which is expanded under the action of heat to form the abradable layer.

The abradable panel may further comprise a carrier tray to which the abradable layer is attached. The abradable layer may be bonded directly to the carrier tray. The carrier tray may extend in both the axial and circumferential direction. The carrier tray may comprise a tray base. The use of a carrier tray would increase the stiffness of the abradable panel and may therefore improve the ease with which the abradable panel can be handled.

The carrier tray may comprise a plurality of walls to which the abradable layer is bonded. The plurality of walls may extend in a direction that is generally perpendicular to the carrier tray base. The use of walls may improve the bond strength between the abradable layer and the carrier tray.

The walls may define a plurality of cells which may be closed cells. The cells may have a hexagonal shape. The abradable layer may at least partially fill the cells. Some or all of the cells may be provided with an opening that extends through the carrier base. This may allow trapped air or gas to escape on expansion of the syntactic film. The carrier tray may comprise a first set of walls comprising a plurality of first walls extending in a first direction and a second set of walls comprising a plurality of second walls extending in a second direction. The first and second walls may be perpendicular. The first and second walls may define a plurality of closed cells having a quadrilateral shape. The first direction may be substantially the axial direction. The second direction may be substantially the circumferential direction. The first direction may be oblique to the axial direction. The second direction may be oblique to the circumferential direction. The first direction may be substantially at 45° to the axial direction. The second direction may be substantially at 45° to the circumferential direction. The orientation of the walls may help to prevent the damage of the cell walls if the fan blades come into contact with them during use.

The abradable layer may project above the level of the walls. This may allow the surface profile of the abradable panel to be machined without damaging the walls and may prevent the fan blades from coming into contact, and hence damaging, the cell walls.

The carrier tray may comprise a plurality of projections to which the abradable layer is bonded. The projections may project in a direction that is substantially perpendicular to the carrier tray base. The projections or turrets may be cylindrical or saw-tooth shaped, for example.

The carrier tray comprises a composite material which may be formed by injection moulding. The carrier tray may comprise a continuous glass fibre is a polyphenylene (PPS) or polyetheretherketone (PEEK) matrix.

The invention also concerns an expandable panel for forming an abradable panel for a fan track liner assembly, comprising: a syntactic film arranged to be expanded so as to form an abradable comprising a syntactic material. The expandable panel may be capable of forming an abradable panel according to any statement herein. The expandable panel may further comprise a carrier tray into which the syntactic film can be expanded. The carrier tray may comprise any combination of the features described with respect to the abradable panel. The syntactic film may be attached to the carrier tray.

The invention also relates to a gas turbine engine comprising an annular engine casing and an annular fan track liner assembly disposed radially within the engine casing and attached thereto, wherein the annular fan track liner assembly comprises a plurality of circumferentially arranged fan track liner panels and a plurality of circumferentially arranged abradable panels, each in accordance with any statement herein, disposed radially inward of the fan track liner panels. The gas turbine engine may further comprise a plurality of composite fan blades.

According to another aspect of the invention there is provided a method of manufacturing an abradable panel for a fan track liner assembly, comprising: expanding syntactic film so as to form an abradable layer comprising a syntactic material. The syntactic film may be expanded into a carrier tray.

The method may further comprise forming a carrier tray.

The invention may comprise any combination of the features and/or limitations referred to herein, except combinations of such features as are mutually exclusive.

Embodiments of the invention will now be described, by way of example, with reference to the accompanying drawings, in which:
Figure 1 schematically shows a partial cross-sectional view of a fan casing;
Figure 2 schematically shows a cross-sectional view of an abradable panel for a fan track liner assembly;
Figure 3 schematically shows a perspective view of a carrier tray of an abradable panel;
Figure 4 schematically shows a perspective view of the carrier tray of Figure 3 with a syntactic film;
Figure 5 schematically shows a complete abradable panel;
Figure 6 schematically shows a fan blade moving relative to an abradable panel;
Figure 7 schematically shows a cross-sectional view of a fan blade abrading an abradable panel;
Figure 8 schematically shows a cross-sectional view of an abradable panel bonded to a fan track liner panel;
Figure 9 schematically shows a second embodiment of an abradable panel;
Figure 10 schematically shows a third embodiment of an abradable panel;
Figure 11 schematically shows a fourth embodiment of an abradable panel;
Figure 12 schematically shows a fifth embodiment of an abradable panel; and
Figure 13-15 schematically show cross-sectionals views of abradable panels having projections extending from the base of the carrier tray.

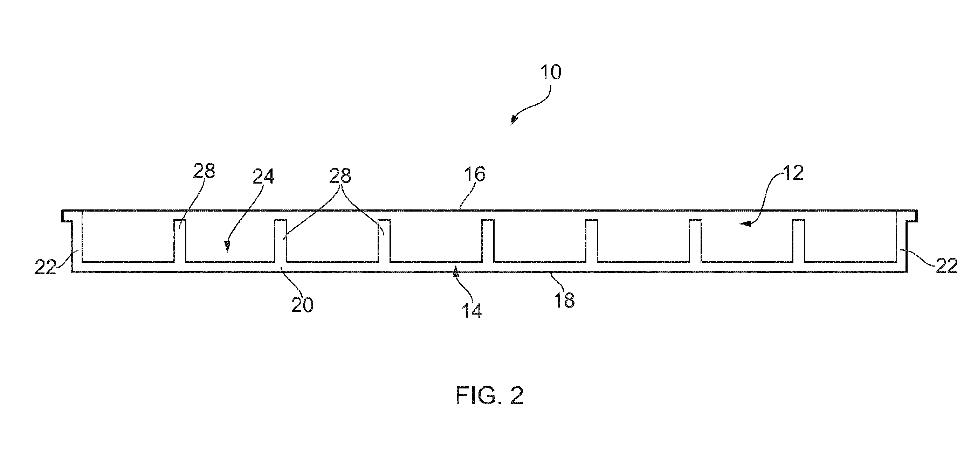

**Figure 2** shows an abradable panel 10 for a fan track liner assembly. The abradable panel 10 comprises an abradable layer 12 bonded to a carrier tray 14. The abradable layer 12 provides an abradable gas-washed surface 16 which in use is capable of being abraded by the radially outer ends of a fan blade. The lower surface 18 of the carrier tray 14 is arranged to be attached, such as by bonding, to a fan track liner panel (not shown) to complete a fan track liner assembly. The abradable gas-washed surface 16 can be machined to the required tolerance either before or after installation.

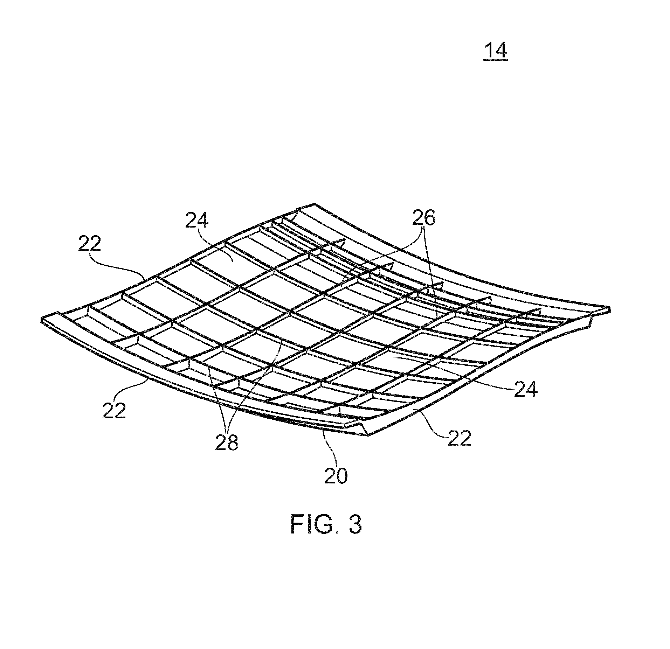

With reference to **Figure 3**, the carrier tray 14 extends in the axial and circumferential directions and forms a segment of an annulus. The carrier tray 14 comprises a tray base 20 having four side walls 22 that are substantially perpendicular to the tray base 20. The carrier tray 14 also comprises a plurality of quadrilateral closed cells 24 that are defined by first and second sets of cell walls. The first set of cell walls comprises a plurality of first cell walls 26 that are spaced from one another and extend in the axial direction. The second set of cell walls comprises a plurality of second cell walls 28 that are spaced from one another and extend in the circumferential direction. The first and second cell walls 26, 28, like the side walls 22, are substantially perpendicular to the tray base 20. Each closed cell 24 is therefore defined by two axially extending first cell walls 26 and two circumferentially extending second cell walls 28. The cellular structure of the carrier tray 14 increases the rigidity of the abradable panel 10 and also provides a "keying" feature that improves the bond between the abradable layer 12 and the tray 14. Although it has been described that the cells 24 are closed cells, it should be appreciated that open-sided cells could be provided.

The carrier tray base 20 and the side walls 22 are formed from a continuous glass fibre thermoplastic resin matrix which is formed into shape and pre-consolidated. In this embodiment the carrier tray comprises a composite comprising continuous glass fibre in a PPS or PEEK matrix. This formed component is then closed into an injection moulding tool and the cell walls 26, 28 are injection moulded onto the tray base 20. The composition of the cell walls 26, 28 is the same as that of the resin of the matrix of the tray base. The resin flow and temperature is set so that it welds to the resin in the tray and forms a single structure.

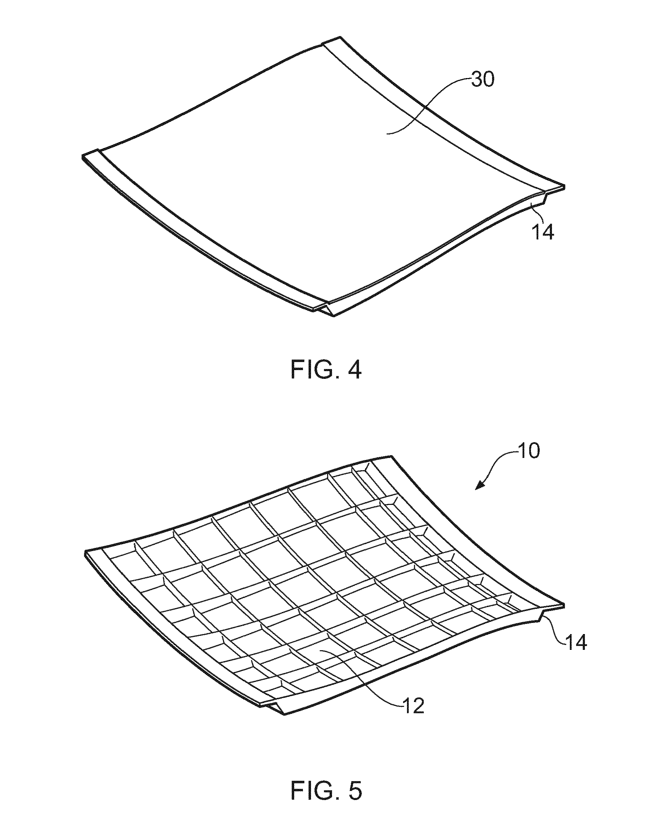

The abradable layer 12 is a syntactic material (or foam) and as can be seen from Figure 2, extends into and fills the cells 24 of the carrier tray 14. Syntactic foam is a resin which is filled with hollow particles. In this particular embodiment the syntactic foam is a modified epoxy resin which is filled with hollow polymeric beads. The syntactic may be available under the commercial name Synspand 9890. This provides a relatively light-weight material that can be abraded evenly and with relative ease. In order to form the abradable layer 12, a film of syntactic material 30 is initially located over the open surface of the carrier tray 14 (**Figure 4**). The syntactic film 30 may be attached to the carrier tray 14 to prevent it from moving. The carrier tray 14 with the syntactic film 30 attached is then placed into support tooling (not shown) and is heated to a predetermined temperature. This causes the syntactic film 30 to expand to form the abradable layer 12 comprising syntactic foam. This is shown in **Figure 5**. As the syntactic film 30 is heated, it expands into the cells 24 provided in the carrier tray 14 and is securely bonded thereto. The cell walls 24, 26 increase the bond area between the carrier tray 14 and the syntactic abradable layer 12. Referring back to Figure 2, in this particular embodiment the abradable layer 12 projects above the level of the cell walls 24, 26. The depth of the carrier tray 14 can be chosen in order to control the density of the syntactic foam. A shallow tray would result in a denser syntactic foam abradable layer 12 than a deeper tray.

To form a fan track liner assembly for a jet engine, an annular arrangement of fan track liner panels made from an aluminium honeycomb structure are bonded, or mechanically fixed, to the inside of the fan casing. An annular arrangement of abradable panels 10 are then bonded to the fan track liner panels. The abradable layers 12 of the plurality of panels 10 are subsequently machined to remove assembly tolerances, thereby forming a gas-washed surface. Since the abradable layer 12 projects above the cell walls 24, 26, the cell walls are not damaged by machining the abradable layer 12.

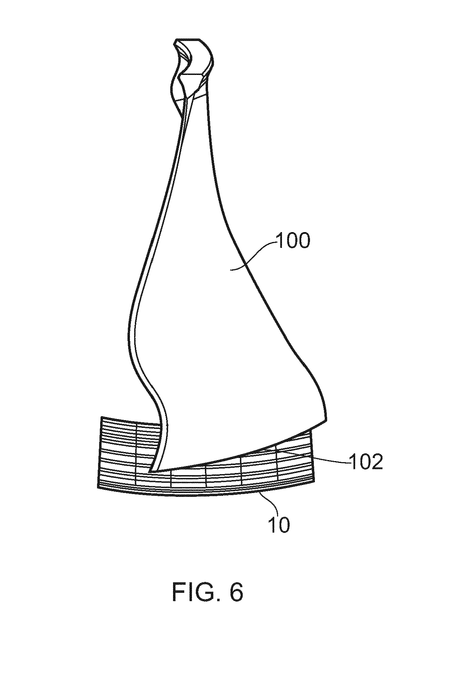

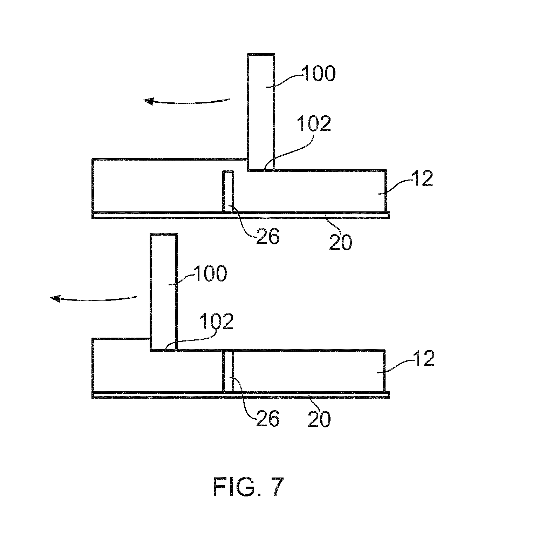

Referring to **Figure 6**, in use the fan blades 100 of the jet engine (of which one is shown in Figure 6) move with respect to the abradable panels 10. The fan blades 100 may be metal or may be made from a composites material. During operation, the fan blades 100 may lengthen due to centrifugal forces. In normal operation, the radially outer edges 102 of the blades 100 do not come into contact with the abradable layer 12. However, in some instances the radially outer edge 102 of a blade 100 may come into contact with the abradable layer 12. As shown in **Figure 7**, in such a situation the radially outer edge 102 of the fan blade 100 abrades the abradable layer 12 which prevents damage to the blade. The syntactic foam of the abradable layer 12 is abraded by local shearing of the hollow glass beads within the foam. This causes low-temperature abrasion without "plucking". The low-temperature abrasion prevents the tips of the fan blades 100 from overheating and being damaged. This may be particularly beneficial for composite blades which may be susceptible to delamination at high temperatures.

In this particular embodiment, the abradable layer 12 projects above the cell walls 26, 28 by an amount that is greater than the maximum amount than the fan blade 100 may project into the abradable layer 12. This means that the cells walls 26, 28 are not damaged by the blade 100 abrading the abradable layer 12.

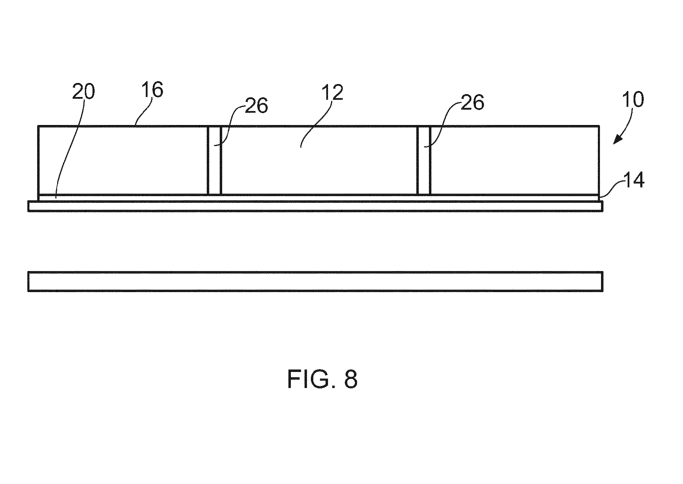

**Figure 8** shows a second embodiment of the invention in which the cell walls 26, 28 are substantially flush with the abradable gas washed surface 16 of the abradable layer 12.

In this embodiment, machining the abradable layer 12 after installation within an engine casing is avoided in order to avoid damaging the cell walls 26, 28. Instead, the dimensions of the abradable layer 12 and the carrier tray 14 have an accurate tolerance and the abradable panels 10 are carefully bonded to a machined surface. The fan track liner panels 32, which are attached to the fan casing 34, are provided with a glass fibre reinforced polymer (GFRP) septum 36 that is carefully machined. Therefore, when the abradable panels 10 are attached to the septum 36, it is not necessary to machine the abradable layer 12 of the abradable panels 10.

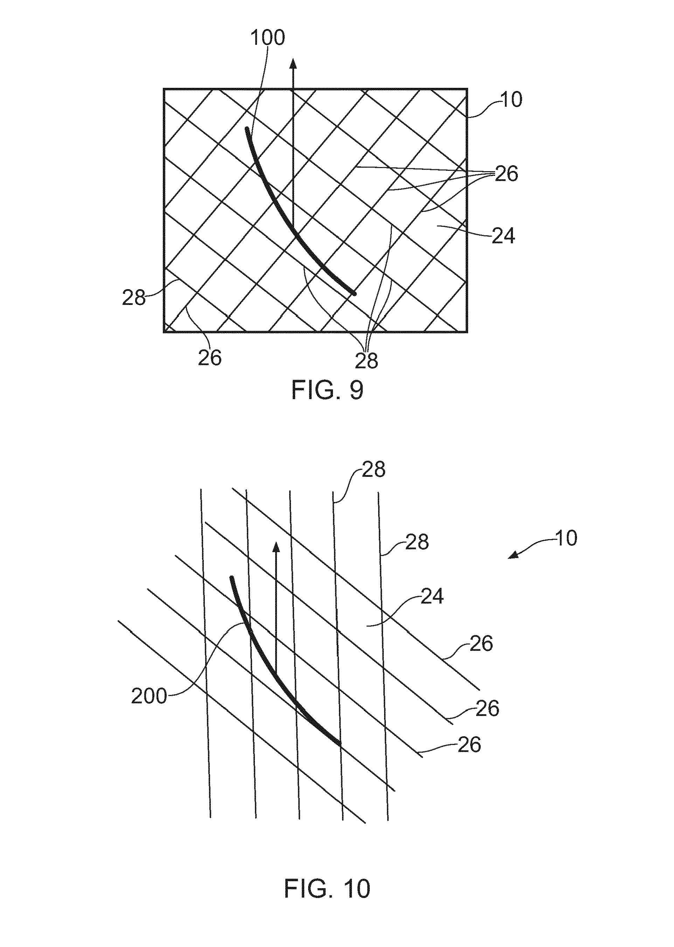

In order to limit or prevent the cell walls 24, 26 from being damaged by a fan blade 100, the orientation of the cell walls 24, 26 may be altered. **Figure 9** shows an embodiment in which the first walls 26 extend in a direction that is at approximately 45° from the axial direction and in which the second walls 28 extend in a direction that is at approximately 45° from the circumferential direction. The cell walls 26, 28 form quadrilateral shaped closed cells 24. The orientation of the cell walls 24, 26 may result in them being damaged less by a moving blade 100. The cell walls 24 oriented at 45° to the axial direction may be more capable of resisting damage than cell walls 24 extending purely in the axial direction. **Figure 10** illustrates a further embodiment in which the first walls 26 extend in a direction that is at approximately 45° from the axial direction, and in which the second walls extend in the circumferential direction. Again, the cell walls 26, 28 form closed cells 24. Since the first set of walls 26 extend in a direction that is oblique to the axial direction, they may be more capable of resisting damage than axially extending cell walls.

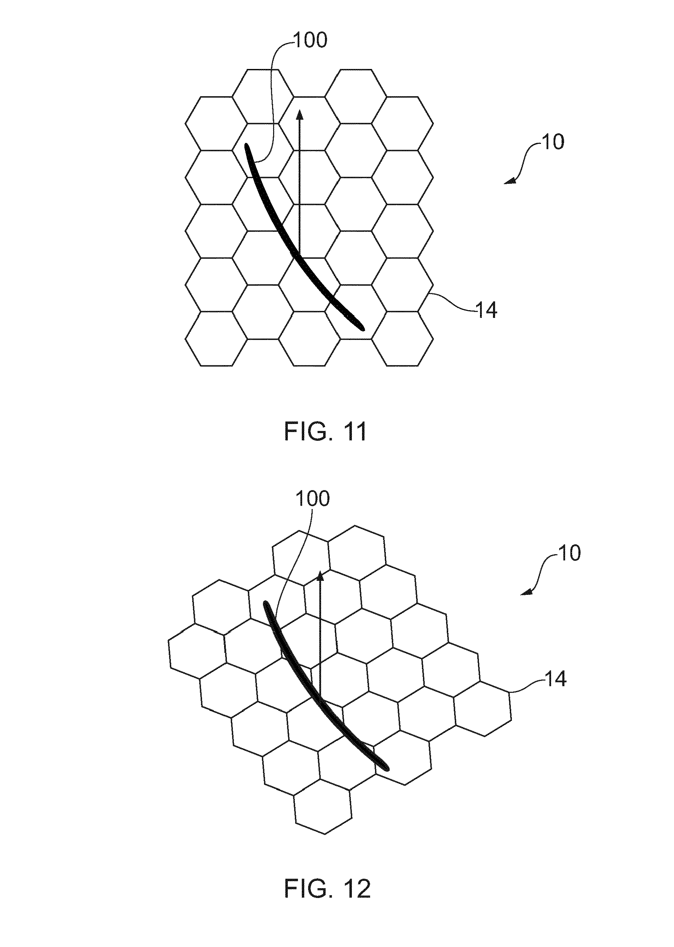

**Figure 11 and 12** illustrate carrier trays 14 in which the cell walls define closed cells 24 having a hexagonal shape. In the embodiment of Figure 10, there are walls that extend in the pure axial direction, whereas in the embodiment of Figure 11 there are no cell walls that are purely axially extending. The shapes of the cells 24 and the orientation of the walls may result in a carrier tray 14 that exhibits a greater resistance to damage.

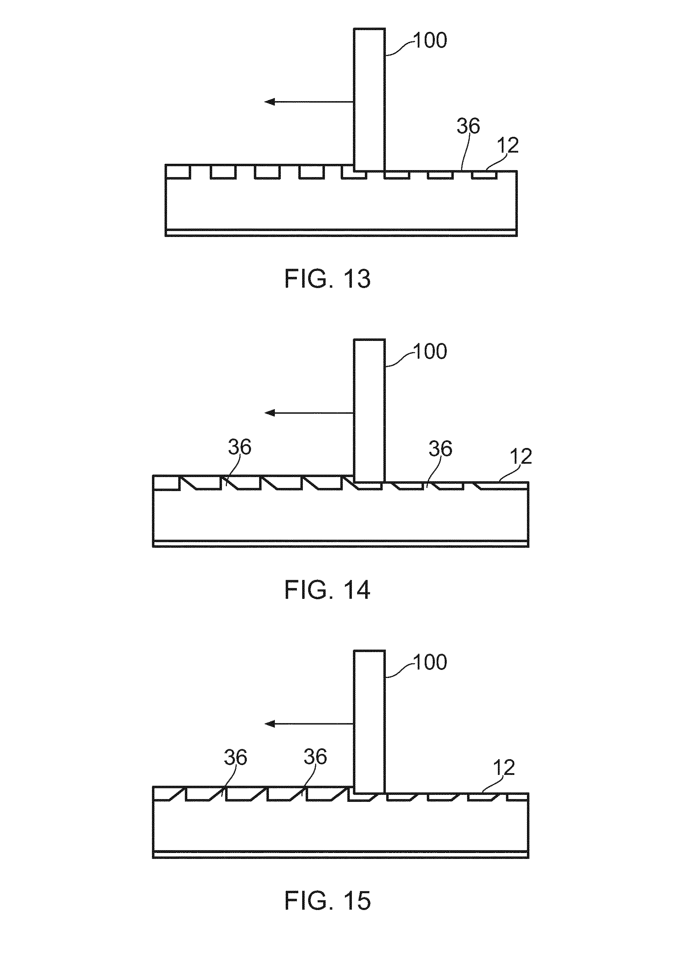

**Figures 13, 14 and 15** show further embodiments which are similar to the embodiments previously described. However, the carrier tray 14 is not of a cellular structure and therefore there are no cell walls. Instead, a plurality of projections 38 extend from the tray base 20 in a direction that is substantially perpendicular to the base 20. The projections are evenly distributed over the area of the carrier tray 14 and act to increase the bond area between the abradable layer 12 and the carrier tray 14. There are a number of different shapes of projections 36 that may be used. The projections may be substantially cylindrical (Figure 12), saw-tooth shaped in the direction of blade travel (Figure 13) or saw-toothed shaped against the direction of blade travel (Figure 14). In these particular embodiments, the projections 36 are substantially flush with the abradable gas-washed surface 16. If in use the blade 100 projects into and abrades the abradable layer 12, the upper portions of the projections 36 may be sheared off without overly damaging the abradable panel 10. The projections 36 could be made particularly thin such that they form filaments that would be guillotined by an incursive blade 100.

## Claims

1. An abradable panel (10) for a fan track liner assembly, comprising:
an abradable layer (12) comprising a syntactic material;
wherein the abradable panel is arranged to be attached to a fan track liner so as to provide an abradable gas-washed surface.

2. An abradable panel according to claim 1, further comprising a carrier tray (14) to which the abradable layer is attached.

3. An abradable panel according to claim 2, wherein the carrier tray comprises a plurality of walls (22, 26, 28) to which the abradable layer is bonded.

4. An abradable panel according to claim 3, wherein the carrier tray comprises a first set of walls comprising a plurality of first walls (26) extending in a first direction and a second set of walls comprising a plurality of second walls (28) extending in a second direction.

5. An abradable panel according to claim 4, wherein the first direction is oblique to the axial direction and/or wherein the second direction is oblique to the circumferential direction.

6. An abradable panel according to any of claims 2-5, wherein the carrier tray comprises a plurality of projections (38) to which the abradable layer is bonded.

7. An abradable panel according to any of claims 2-6, wherein the carrier tray comprises a composite material.

8. An expandable panel for forming an abradable panel for a fan track liner assembly, comprising:
a syntactic film (30) arranged to be expanded so as to form an abradable comprising a syntactic material.

9. An expandable panel according to claim 8, further comprising a carrier tray into which the syntactic film can be expanded.

10. An expandable panel according to claim 9, wherein the syntactic film is attached to the carrier tray.

11. A gas turbine engine comprising an annular engine casing and an annular fan track liner assembly disposed radially within the engine casing and attached thereto, wherein the annular fan track liner assembly comprises a plurality of circumferentially arranged fan track liner panels and a plurality of circumferentially arranged abradable panels, each in accordance with any of claims 1-7, disposed radially inward of the fan track liner panels.

12. A gas turbine engine according to claim 11, further comprising a plurality of composite fan blades.

13. A method of manufacturing an abradable panel for a fan track liner assembly, comprising:
expanding syntactic film so as to form an abradable layer comprising a syntactic material.

14. A method of manufacturing an abradable panel according to claim 13, wherein the syntactic film is expanded into a carrier tray.

15. A method of manufacturing an abradable panel according to claim 14, further comprising forming a carrier tray.
